# EUROPÄISCHE PATENTSCHRIFT

(11) **EP 2 056 157 B1**
(45) Veröffentlichungstag und Bekanntmachung des Hinweises auf die Patenterteilung: **01.10.2014**
(21) Anmeldenummer: 08018081.3
(22) Anmeldetag: 15.10.2008
(51) Int. Cl.: G02C 11/06, G02C 5/20, G02C 5/22

(54) **Anzeigevorrichtung**
Display device
Dispositif d'affichage

(30) Priorität: 29.10.2007 DE 102007051959
(43) Veröffentlichungstag der Anmeldung: 06.05.2009
(73) Patentinhaber: Carl Zeiss AG, 73447 Oberkochen (DE)
(72) Erfinder: Rottenkolber, Birgit, 85092 Kösching (DE); Beck, Klaus, 73447 Oberkochen (DE); Knoop, Christian, 1098 Amsterdam (NL); Jarvis, Nathaniel A., 71083 Herrenberg (DE); Weber, Peter, 72213 Altenstieg (DE); Engler, Berthold, 72113 Altenstieg (DE)
(74) Vertreter: Geyer, Fehners & Partner

(56) Entgegenhaltungen:
- EP-A1- 0 353 930
- DE-U1- 9 301 529
- US-A- 5 289 592
- US-A- 5 606 743
- US-A- 5 703 670
- US-A1- 2004 145 699
- US-A1- 2004 160 572
- US-A1- 2005 046 790
- US-A1- 2005 168 824
- US-A1- 2006 055 875
- US-A1- 2007 008 484

## Beschreibung

Die vorliegende Erfindung betrifft eine Anzeigevorrichtung mit einem Bildmodul zum Erzeugen eines Bildes, einem brillenartigen Gestell, das das Bildmodul trägt und einen Vorderabschnitt mit einer Nasenauflage sowie zwei seitliche Ohrbügel, die am Vorderabschnitt befestigt sind, aufweist, und einem über eine Positionsmechanik am Gestell befestigten Ohrhörer, der im auf den Kopf eines Benutzers aufgesetzten Zustand der Anzeigevorrichtung mittels der Positionsmechanik vor einem Ohr des Benutzers positionierbar ist.

Eine solche Anzeigevorrichtung ist beispielsweise auf der US 2005/0168824 A1 bekannt. Bei dieser Anzeigevorrichtung ist die Positionsmechanik jedoch als biegbares Rohr ausgebildet, um den Ohrhörer in den Gehörgang des Ohres eines Benutzers einführen zu können. Eine solche Positionsmechanik ist nur für in den Gehörgang einzuführende Ohrhörer (Im-Ohr-Kopfhörer) geeignet, da die Position des Ohrhörers im wesentlichen dadurch sichergestellt ist, daß der Ohrhörer in den Ohrkanal eingeführt ist. Für einen an das Ohr außen anzulegenden Ohrhörer ist eine Positionsmechanik in Form eines biegbaren Rohres nicht geeignet, da eine solche Positionsmechanik eine eingestellte Position nicht dauerhaft gewährleisten kann. Schon kleine Kräfte genügen, um die Position zu verändern, wodurch in unerwünschter Weise die akustischen Signale des Ohrhörers von dem Benutzer schlechter oder gar nicht mehr erfaßt werden können.

Auch bei der aus der DE 196 24 184 A1 bekannten Brille mit Ohrhörer sind die Ohrhörer über biegbare Rohre an der Brille befestigt. Somit besteht wiederum das Problem, daß eine dauerhafte Positionierung am Ohr des Benutzers nicht gewährleistet werden kann.

Die US 7,147,324 B2 beschreibt eine Brille mit Ohrhörem. Die Ohrhörer weisen jeweils ein hohlzylinderförmiges Verbindungsstück auf, das auf einer sich linear erstreckenden Stange geführt ist. Damit ist eine lineare Verschiebung und gleichzeitig eine Drehung um die Längsachse der Stange möglich. Dies führt jedoch zu dem Nachteil, daß die Positionierung am Ohr nur sehr schwer gesichert werden kann, da schon geringe Kräfte ausreichen, um eine Drehung um die Längsachse der Stange zu bewirken. Nachdem sich die Längsachse der Stange parallel zum Brillenbügel erstreckt, führt dies zu einem Abheben des Ohrhörers vom Ohr.

Die JP 7-159720 zeigt eine Anzeigevorrichtung, die zur Befestigung am Kopf einen Kopfring bzw. ein Kopfband enthält. Eine solche Anzeigevorrichtungen weist einen geringen Tragekomfort auf, ist schwierig aufzusetzen und zu tragen.

Die US 5,703,670 beschreibt eine Schutzbrille mit Ohrstöpseln.

Ausgehend hiervon ist es Aufgabe der Erfindung, eine Anzeigevorrichtung der eingangs genannten Art so weiter zu bilden, daß der Ohrhörer für den jeweiligen Benutzer leicht am Ohr zu positionieren ist und diese Positionierung dauerhaft sichergestellt werden kann.

Erfindungsgemäß wird die Aufgabe bei einer Anzeigevorrichtung der eingangs genannten Art dadurch gelöst, daß die Positionsmechanik eine Linearführung, die über ein in verschiedenen Drehstellungen verrastbares Drehgelenk am Gestell befestigt ist, aufweist und der Ohrhörer an dem dem Drehgelenk abgewandten Ende der Linearführung angeordnet ist, wobei die Positionsmechanik den Ohrhörer in einer Richtung quer zur Linearführung elastisch vorspannt, so dass ein Anlegen am Ohr bei unterschiedlichen Kopfbreiten der Benutzer gewährleistet wird.

Durch diese Ausbildung der Positionsmechanik ist es möglich, den Ohrhörer individuell angepaßt am Ohr des Benutzers (und nicht im Ohr) zu positionieren und in dieser Position zu halten. Ferner kann die Anzeigevorrichtung sehr kompakt ausgebildet werden bei gleichzeitig hohem Tragekomfort.

Die Positionsmechanik kann ferner einen Arretiermechanismus aufweisen, mit dem die eingestellte Position des Ohrhörers arretierbar ist.

Der Arretiermechanismus kann insbesondere eine getrennte Arretierung bzw. Fixierung des Drehgelenkes und der Linearführung ermöglichen. Die Arretierung ist beispielsweise mittels Reibschluß und/oder Formschluß möglich.

Ferner kann die Linearführung als Teleskopführung ausgebildet sein. Dies bringt den Vorteil mit sich, daß im zusammengeschobenen Zustand der Teleskopführung diese einen geringen Platzbedarf aufweist.

Insbesondere kann die elastische Vorspannung durch die Eigenelastizität der Linearführung realisiert sein.

Die Linearführung kann eine Rastmechanik aufweisen, mit der verschiedene Linearpositionen der Linearführung fixiert werden können. Eine Fixierung ist auch mittels eines Klemmelementes möglich.

Insbesondere kann das Drehgelenk der Positionsmechanik an einem der Ohrbügel befestigt sein. Dies führt zu einer besonders platzsparenden Ausbildung der erfindungsgemäßen Anzeigevorrichtung.

Ferner kann die Anzeigevorrichtung an jedem Ohrbügel jeweils eine Positionsmechanik mit einem Ohrhörer aufweisen. Damit ist eine Beschallung von beiden Ohren des Benutzers möglich. Die beiden Ohrhörer können voneinander unabhängig optimal zum jeweiligen Ohr positioniert werden.

Die Ohrhörer können insbesondere eine Richtcharakteristik in Richtung zu den Ohren im aufgesetzten Zustand der Anzeigevorrichtung aufweisen.

Das Bildmodul zum Erzeugen des Bildes kann das Bild als virtuelles Bild so erzeugen, daß es ein Benutzer in einem vorbestimmten Abstand vor dem Auge wahrnehmen kann.

Die erfindungsgemäße Anzeigevorrichtung kann auch als HMD-Vorrichtung bezeichnet werden (Head-Mounted-Display-Vorrichtung). Insbesondere kann das Bildmodul wie bei bekannten HMD-Vorrichtungen ausgebildet werden.

Ferner kann das Bildmodul eine Steuereinrichtung aufweisen, die auf der Basis vorgegebener Bilddaten ein bilderzeugendes Element des Bildmoduls so ansteuert, daß das gewünschte Bild erzeugt wird. Das Bildmodul kann ferner einer Abbildungsoptik zur Abbildung des mittels dem bilderzeugenden Element erzeugten Bildes enthalten.

Die Steuereinrichtung des Bildmoduls kann auch zur Steuerung der Ohrhörer benutzt werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
Fig. 1 eine Seitenansicht einer ersten Ausführungsform der erfindungsgemäßen Anzeigevorrichtung;
Fig. 2 eine perspektivische Ansicht der Anzeigevorrichtung von Fig.1;
Fig. 3 eine stark vereinfachte Draufsicht zur Erläuterung des Bildmoduls der Anzeigevorrichtung von Fig. 1;
Fig. 4 eine perspektivische Ansicht der Anzeigevorrichtung von Fig. 1, wobei der linke Brillenbügel in einer Explosionsdarstellung gezeigt ist;
Fig. 5 eine Schnittdarstellung der Positionsmechanik 13;
Fig. 6 eine Schnittdarstellung des Drehgelenkes 40 der Positionsmechanik 13;
Fig. 7 eine Seitenansicht des linken Ohrbügels zusammen mit der Positionsmechanik zur Erläuterung einer weiteren Ausführungsform der erfindungsgemäßen Anzeigevorrichtung, und
Fig. 8 eine Seitenansicht des linken Ohrbügels zusammen mit der Positionsmechanik 13, wobei der Gehäusedeckel entfernt ist.

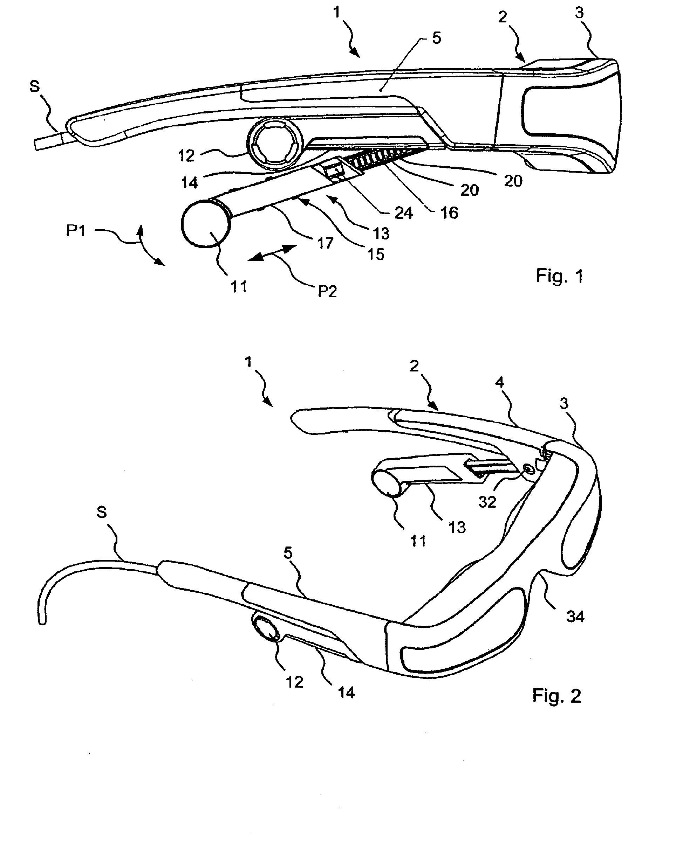

Bei der in den Figuren 1 bis 6 gezeigten Ausführungsform umfaßt die erfindungsgemäße Anzeigevorrichtung 1 ein brillenartiges Gestell 2 mit einem Vorderabschnitt 3 und zwei Ohrbügeln 4, 5.

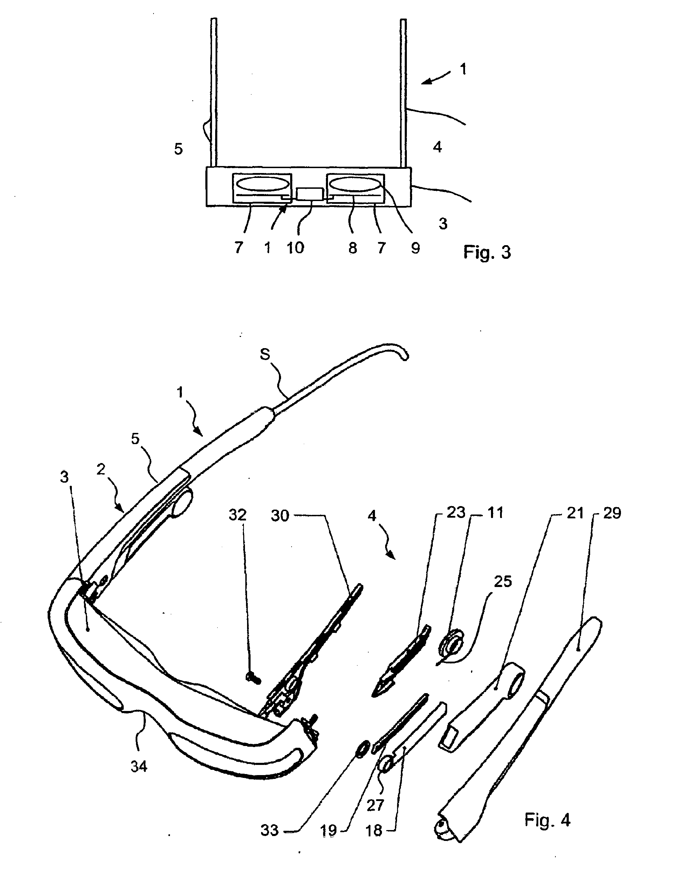

Im Vorderabschnitt 3 ist, wie in der schematischen Darstellung von Fig. 3 ersichtlich ist, ein Bildmodul enthalten, das für jedes Auge eines Benutzers, der die Anzeigevorrichtung 1 aufsetzt, eine Anzeigeeinheit 7 mit einem bilderzeugenden Element 8 und einer Abbildungsoptik 9 aufweist. Das Bildmodul enthält ferner eine Steuereinheit 10, die die Anzeigeeinheiten 7 auf der Basis vorgegebener Bilddaten ansteuert, um die gewünschten Bilder zu erzeugen. Die Bilddaten können z.B. über die Signalleitung S, die durch den rechten Ohrbügel 5 verläuft, der Steuereinheit 10 zugeführt werden.

An jedem der Ohrbügel 4, 5 ist jeweils ein Ohrhörer 11, 12 über eine Positionsmechanik 13, 14 befestigt. Nachdem die Ohrhörer 11, 12 und die zugeordneten Positionsmechaniken 13, 14 zueinander spiegelsymmetrisch ausgebildet sind, wird nachfolgend im Detail nur der Ohrhörer 11 mit der Positionsmechanik 13 für den linken Ohrbügel 4 beschrieben.

Wie am besten aus Fig. 1 und 2 ersichtlich ist, ist die Positionsmechanik 13 so ausgebildet, daß der Ohrhörer 11 relativ zum Ohrbügel 4 nach unten geschwenkt (Pfeil P1 in Fig. 1) werden kann und in Längsrichtung (Pfeil P2 in Fig. 1) der Positionsmechanik 13 verschiebbar ist.

Dazu weist die Positionsmechanik 13 eine lineare Teleskopführung 15 auf, die drehbar am Ohrbügel 4 befestigt ist.

Die Teleskopführung 15 umfaßt eine erste Teleskopeinheit 16 und eine gegenüber dieser in Längsrichtung verschiebbare zweite Teleskopeinheit 17. Die erste Teleskopeinheit 16 umfaßt eine Teleskopführung 18 (Fig. 4), die drehbar am Ohrbügel 4 befestigt ist, sowie eine an der Teleskopführung 18 befestigte Rastplatte 19, die in ihrer Längsrichtung mehrere voneinander beabstandete Vertiefungen 20 (Fig. 1) aufweist.

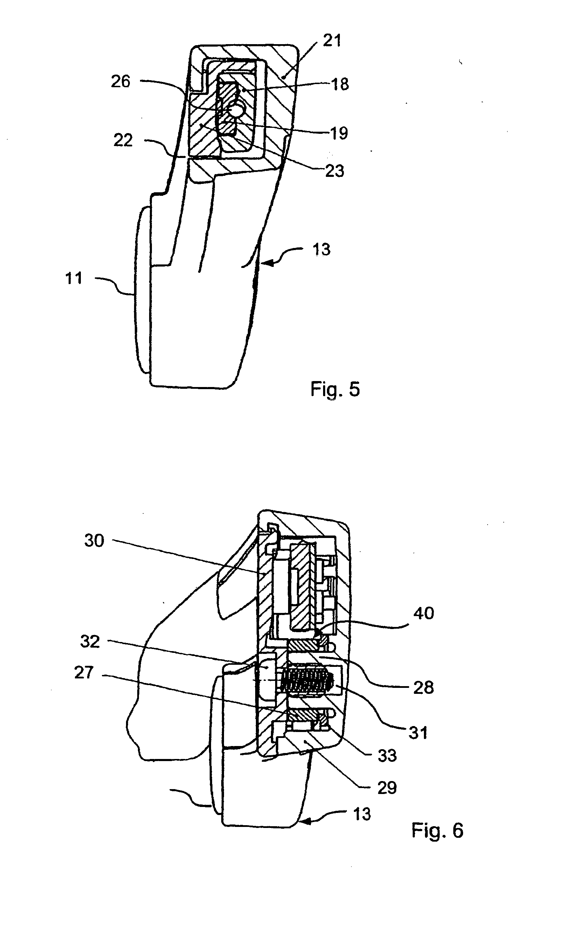

Die zweite Teleskopeinheit 17 umfaßt ein Teleskopgehäuse 21 (Fig. 4, 5), dessen nach innen weisende Seitenöffnung 22 mit einer Teleskopabdeckung 23 verschlossen ist. Die Teleskopabdeckung 23 weist ein Rastelement 24 (Fig. 1, 5) auf, das im auf die Teleskopführung 18 aufgeschobenen Zustand des Teleskopgehäuses 21 in eine der Vertiefungen 20 der Rastplatte 19 eingreift. Das Rastelement 24 ist derart elastisch ausgebildet, daß es gegen die Rastplatte 19 vorgespannt ist und somit eine vorbestimmte Kraft aufzuwenden ist, um die zweite Teleskopeinheit 17 linear relativ zur ersten Teleskopeinheit 16 zu verschieben. Nach erfolgter Verschiebung rastet dann das Rastelement 24 in die entsprechende Vertiefung 20 ein und fixiert somit die zweite Teleskopeinheit 16.

Das Teleskopgehäuse 21 weist an seinem hinteren Ende eine Aufnahme für den Ohrhörer 11 auf, der in dieser Aufnahme eingesetzt ist. Das Anschlußkabel 25, des Ohrhörers 11 verläuft durch eine entsprechende Durchgangsöffnung 26 (Fig. 5) in der ersten Teleskopeinheit 16. Das Anschlußkabel 25 ist nur in Fig. 4 angedeutet. Die Durchgangsöffnung 26 ist hier durch die Teleskopführung 18 und die Rastplatte 19 begrenzt. Das Anschlußkabel 25, das durch die Durchgangsöffnung 25 verläuft, erstreckt sich bis zur Steuereinheit 10 im Vorderabschnitt 3, so daß die Steuereinheit 10 auch den Ohrhörer 11 ansteuern kann, um dem Benutzer der Anzeigevorrichtung 1 Audiosignale darzubieten. Bei den Audiosignalen kann es sich insbesondere um Signaltöne, Texte und/oder um Musik handeln.

Das Anschlußkabel 25 ist so vorgesehen, daß ein Längenausgleich erfolgt, wenn die Länge der Teleskopführung verändert wird. Dies kann z.B. durch zumindest einen spiralförmigen Kabelabschnitt oder einer Kabeltrommel mit Vorspannung realisiert werden.

Wie am besten in Fig. 4 und 6 ersichtlich ist, ist das vordere Ende 27 der Teleskopführung 18 ringförmig ausgebildet und drehbar auf einem Achsenabschnitt 28 eines Bügelgehäuses 29 des Ohrbügels 4 gelagert, wobei das Bügelgehäuse 29 von der Innenseite durch einen Gehäusedeckel 30 verschlossen ist, der zugleich das vordere Ende 27 der Teleskopführung 18 in axialer Richtung sichert. Dazu weist der Achsenabschnitt 28 eine Mittelbohrung 31 auf, in die eine Fixierschraube 32 durch den Gehäusedeckel 29 hindurch eingeschraubt ist. In dem Bügelgehäuse 29 ist ferner ein Federring 33 angeordnet, der das vordere Ende 27 der Teleskopführung 18 gegen den Gehäusedeckel 30 drückt, so daß durch den vorliegenden Reibschluß das Eigengewicht der Teleskopführung 15 zusammen mit dem Ohrhörer 11 keine Änderung der Drehstellung bewirkt. Zu einer Änderung der Drehstellung muß eine weitere externe Kraft angewendet werden. Das vordere Ende 27 der Teleskopführung bildet zusammen mit dem Achsenabschnitt 18 ein Drehgelenk 40.

Durch die Positionsmechanik 13 ist es somit möglich, den Ohrhörer 11 gegenüber dem Ohrbügel 4 zu verschwenken (Drehgelenk 40) und aufgrund der linearen Teleskopführung den Abstand des Ohrhörers 11 von der Drehachse der Positionsmechanik 13 bzw. vom Drehgelenk 40 zu verändern. Damit ist eine Positionierung des Ohrhörers 11 in zwei Freiheitsgraden möglich.

Wenn ein Benutzer die Anzeigevorrichtung 1 trägt, liegen die beiden Ohrbügel 4 und 5 auf den Ohren des Benutzers auf und liegt eine Nasenauflage 34 des Vorderabschnitts 3 auf dem Nasenrücken des Benutzers auf. Der Benutzer trägt somit die Anzeigevorrichtung 1 wie eine Brille und kann die Ohrhörer 4 und 5 aufgrund den durch die Positionsmechaniken 13, 14 bereitgestellten Freiheitsgraden genau vor seinen Ohren (vor dem äußeren Gehörgang) positionieren.

Die Teleskopführung 15 ist ferner noch so ausgebildet, daß sie aufgrund ihrer Eigenelastizität nach innen (also zum gegenüber liegenden Ohrbügel 5 hin) vorgespannt ist, wodurch unterschiedliche Kopfbreiten des Benutzers ausgeglichen werden können und gleichzeitig sichergestellt ist, daß der Ohrhörer 11 auf dem Ohr des Benutzers bzw. auf der Ohrmuschel vor dem äußeren Gehörgang aufliegt.

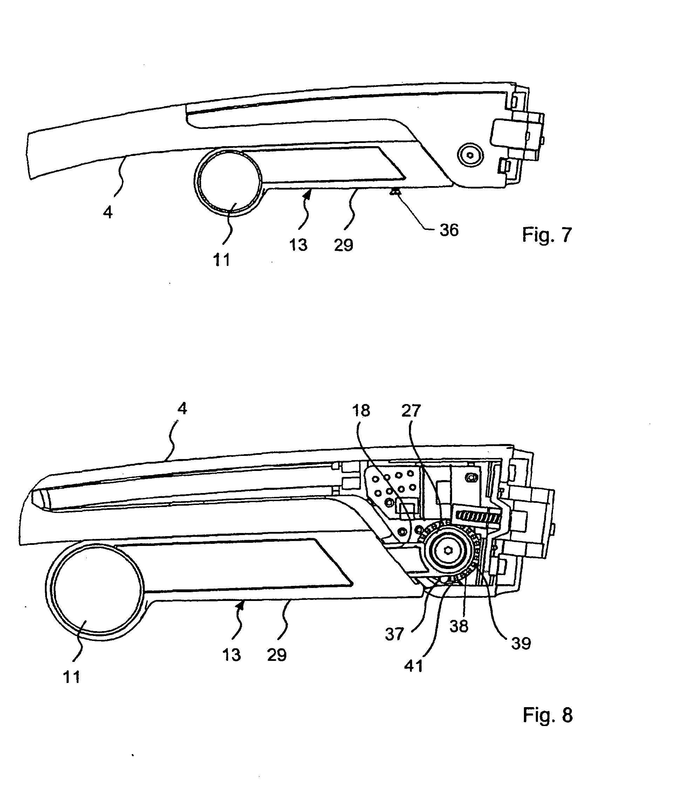

In Fig. 7 ist eine Seitenansicht des Ohrbügels 4 zusammen mit der Positionsmechanik 13 und dem Ohrhörer 11 gezeigt, bei der sich die Positionsmechanik 13 bezüglich der Art der Fixierung der gegeneinander verschiebbaren Teleskopeinheiten 16 und 17 von der bisher beschriebenen Ausführungsform unterscheidet. Wie in Fig. 7 angedeutet ist, ist in das Teleskopgehäuse 29 von unten eine Fixierschraube 36 eingeschraubt. Durch Anziehen der Fixierschraube 36 ist es möglich, die zweite Teleskopeinheit 17 von innen gegen die erste Teleskopeinheit 16 zu drücken und somit einen Reibschluß zu erzeugen, um die gewünschte Fixierung der beiden Teleskopeinheiten 16 und 17 zu erzielen. Die Fixierschraube 36 kann dabei so angezogen werden, daß ein Reibschluß vorliegt, der jedoch ein Verschieben der beiden Teleskopeinheiten 16 und 17 relativ zueinander durch Ziehen oder Drücken am Ohrhörer 11 in Längsrichtung der Teleskopführung 15 zuläßt. Ohne Anwendung einer externen Kraft sind aber beide Teleskopeinheiten 16 und 17 zueinander fixiert.

In Fig. 8 ist eine Abwandlung des Drehgelenkt 40 dargestellt. In diesem Fall ist an dem vorderen Ende 27 der Teleskopführung 18 ein sich axial erstreckender Vorsprung 37 ausgebildet. Als Gegenstück zu dem Vorsprung 37 ist im Bügelgehäuse 29 drehfest ein Rastring 38 angeordnet, der in Umfangsrichtung eine Vielzahl von voneinander beabstandeten Vertiefungen 39 aufweist. Durch die Vertiefungen 39 sind verschiedene Schwenkstellungen der Positionsmechanik 13 vorgegeben, bei denen der Vorsprung 37 in die jeweilige Vertiefung 39 einsteht und somit eine Arretierung in der jeweiligen Schwenkstellung bewirkt.

In dem Bügelgehäuse 29 kann ferner ein Anschlagelement 41 vorhanden sein, an dem der Vorsprung 37 in der in Fig. 8 gezeigten Parkstellung der Positionsmechanik 13 anliegt, um die Positionsmechanik 13 in dieser Stellung zu fixieren. Ferner kann auch die Teleskopführung eine solche Sicherung durch Einrasten in der Stellung aufweisen, in der die Teleskopführung so weit wie möglich zusammengeschoben ist.

Natürlich ist es möglich, den Rastring 38 am vorderen Ende 27 der Teleskopführung 18 vorzusehen und den Vorsprung 37 mit dem Bügelgehäuse 29 zu verbinden.

Ferner kann Schwenkstellung durch Klemmen gesichert werden. Auch kann ein Fixierelement in Form eines Schwanenhalses verwendet werden, um die eingestellte Schwenkstellung zu arretieren.

## Patentansprüche

1. Anzeigevorrichtung (1) mit
einem Bildmodul zum Erzeugen eines Bildes,
einem brillenartigen Gestell (2), das das Bildmodul trägt und einen Vorderabschnitt (3) mit einer Nasenauflage (34) sowie zwei seitliche Ohrbügel (4, 5), die am Vorderabschnitt (3) befestigt sind, aufweist,
und einem über eine Positionsmechanik (13, 14) am Gestell (2) befestigten Ohrhörer (11, 12), der im auf den Kopf eines Benutzers aufgesetzten Zustand der Anzeigevorrichtung mittels der Positionsmechanik (13, 14) vor einem Ohr des Benutzers positionierbar ist,
**dadurch gekennzeichnet, daß** die Positionsmechanik (13, 14) eine Linearführung (15), die über ein in verschiedenen Drehstellungen verrastbares Drehgelenk (40) am Gestell (2) befestigt ist, aufweist und der Ohrhörer (11, 12) an dem dem Drehgelenk (40) abgewandten Ende der Linearführung (15) angeordnet ist, wobei die Positionsmechanik (13, 14) den Ohrhörer (11, 12) in einer Richtung quer zur Linearführung (15) elastisch vorspannt, so dass ein Anlegen am Ohr bei unterschiedlichen Kopfbreiten der Benutzer gewährleistet wird.

2. Anzeigevorrichtung (1) nach Anspruch 1, **gekennzeichnet durch** einen Arretiermechanismus, mit dem die mittels der Positionsmechanik (13, 14) eingestellte Position des Ohrhörers (4, 5) arretierbar ist.

3. Anzeigevorrichtung (1) nach Anspruch 2, **dadurch gekennzeichnet, daß** mittels dem Arretiermechanismus das Drehgelenk (40) und die Linearführung (15) voneinander unabhängig arretierbar sind.

4. Anzeigevorrichtung (1) nach Anspruch 2 oder 3, **dadurch gekennzeichnet, daß** die Arretierung durch Form- und/oder Reibschluß erfolgt.

5. Anzeigevorrichtung (1) nach einem der obigen Ansprüche, **dadurch gekennzeichnet, daß** die Linearführung (15) eine Rastmechanik (24, 20) aufweist.

6. Anzeigevorrichtung (1) nach einem der obigen Ansprüche, **dadurch gekennzeichnet, daß** die elastische Vorspannung durch die Eigenelastizität der Linearführung (15) realisiert ist.

7. Anzeigevorrichtung (1) nach einem der obigen Ansprüche, **dadurch gekennzeichnet, daß** die Linearführung (15) ein Klemmelement zu Fixierung der mittels der Linearführung (15) eingestellten Linearposition aufweist.

8. Anzeigevorrichtung (1) nach einem der obigen Ansprüche, **dadurch gekennzeichnet, daß** das Drehgelenk (40) der Positionsmechanik (13, 14) an einem der Ohrbügel (4, 5) befestigt ist.

9. Anzeigevorrichtung (1) nach einem der obigen Ansprüche, **dadurch gekennzeichnet, daß** an jedem Ohrbügel (4, 5) jeweils eine Positionsmechanik (13, 14) mit einem Ohrhörer (11, 12) befestigt ist.

## Claims

1. A display apparatus (1), comprising
an image module for generating an image,
a spectacle-like frame (2) which carries the image module and includes a front portion (3) with a nose support (34) as well as two side arms (4, 5), which are mounted to the front portion (3), and an earphone (11, 12) mounted to the frame (2) via a positioning mechanism (13, 14), which earphone can be positioned in front of an ear of the user by means of the positioning mechanism (13, 14) when the display apparatus is mounted on the user's head,
**characterized in that** the positioning mechanism (13, 14) comprises a linear guide (15), which is mounted to the frame (2) via a hinge joint (40) that can be arrested in various rotary positions, and the earphone (11, 12) is arranged at the end of the linear guide (15) turned away from the hinge joint (40), wherein the positioning mechanism (13, 14) elastically pretensions the earphone (11, 12) in a direction transverse to the linear guide (15), so that it is ensured that the earphone contacts the ear even in cases of different head sizes of the users

2. The display apparatus (1) as claimed in claim 1, **characterized by** a locking mechanism by which the position of the earphone (4, 5) adjusted by means of the positioning mechanism (13, 14) can be locked.

3. The display apparatus (1) as claimed in claim 2, **characterized in that** the locking mechanism enables independent locking of the hinge joint (40) and of the linear guide (15).

4. The display apparatus (1) as claimed in claim 2 or 3, **characterized in that** said locking is effected by positive locking and/or friction locking.

5. The display apparatus (1) as claimed in any one of the above claims, **characterized in that** the linear guide (15) comprises an arresting mechanism (24, 20).

6. The display apparatus (1) as claimed in any one of the above claims, **characterized in that** the elastic pretension is realized by the inherent elasticity of the linear guide (15).

7. The display apparatus (1) as claimed in any one of the above claims, **characterized in that** the linear guide (15) comprises a clamping element for fixing the linear position adjusted by means of the linear guide (15).

8. The display apparatus (1) as claimed in any one of the above claims, **characterized in that** the hinge joint (40) of the positioning mechanism (13, 14) is mounted to one of the side arms (4, 5).

9. The display apparatus (1) as claimed in any one of the above claims, **characterized in that** one positioning mechanism (13, 14) each with an earphone (11, 12) is mounted to each side arm (4, 5).

## Revendications

1. Dispositif d' affichage (1) comportant
un module d'image permettant de générer une image,
une monture (2) du type monture de lunettes, qui porte le module d'image et comporte une partie avant (3) avec un pont nasal (34), ainsi que deux branches latérales (4, 5) qui sont fixées à la partie avant (3),
et un écouteur (11, 12), qui est fixé à la monture (2) par l'intermédiaire d'un système mécanique de positionnement (13, 14) et qui, lorsque le dispositif d'affichage est posé sur la tête d'un utilisateur, peut être positionné devant une oreille de l'utilisateur au moyen du système mécanique de positionnement (13, 14),
**caractérisé en ce que** le système mécanique de positionnement (13, 14) comporte un guidage linéaire (15) qui est fixé sur la monture (2) par l'intermédiaire d'une articulation rotative (40) pouvant être immobilisée dans différentes positions de rotation, et l'écouteur (11, 12) est disposé au niveau de l'extrémité du guidage linéaire (15), opposée à l'articulation rotative (40), ledit système mécanique de positionnement (13, 14) assurant la précontrainte élastique de l'écouteur (11, 12) dans une direction transversale au guidage linéaire (15), de manière à garantir son appui contre l'oreille quelle que soit la largeur de la tête de l'utilisateur.

2. Dispositif d'affichage (1) selon la revendication 1, **caractérisé par** un mécanisme d'arrêt, par lequel l'écouteur (4, 5) peut être immobilisé dans la position réglée au moyen du système mécanique de positionnement (13, 14).

3. Dispositif d'affichage (1) selon la revendication 2, **caractérisé en ce que** l'articulation rotative (40) et le guidage linéaire (15) peuvent être immobilisés indépendamment l'un de l'autre au moyen du mécanisme d'arrêt.

4. Dispositif d'affichage (1) selon la revendication 2 ou 3, **caractérisé en ce que** l'immobilisation est assurée par emboîtement ou par frottement.

5. Dispositif d'affichage (1) selon l'une quelconque des revendications précédentes, **caractérisé en ce que** le guidage linéaire (15) comporte un mécanisme de blocage (24, 20).

6. Dispositif d'affichage (1) selon l'une quelconque des revendications précédentes, **caractérisé en ce que** la précontrainte élastique est obtenue sous l'effet de la propre élasticité du guidage linéaire (15).

7. Dispositif d'affichage (1) selon l'une quelconque des revendications précédentes, **caractérisé en ce que** le guidage linéaire (15) comporte un élément de serrage permettant de fixer la position linéaire réglée par le guidage linéaire (15).

8. Dispositif d'affichage (1) selon l'une quelconque des revendications précédentes, **caractérisé en ce que** l'articulation rotative (40) du système mécanique de positionnement (13, 14) est fixée à l'une des branches (4, 5).

9. Dispositif d'affichage (1) selon l'une quelconque des revendications précédentes, **caractérisé en ce qu'**un système mécanique de positionnement (13, 14) avec un écouteur (11, 12) est fixé à chaque branche (4, 5).
